# EUROPÄISCHE PATENTANMELDUNG

(11) **EP 4 686 867 A1**
(43) Veröffentlichungstag der Anmeldung: **04.02.2026**
(21) Anmeldenummer: 24191365.6
(22) Anmeldetag: 29.07.2024
(51) Int. Cl.: F16L 37/10, F16L 37/42, F17C 13/04

(54) **AUFNAHMEKUPPLUNGSELEMENT ZUR VERBINDUNG EINER FLUIDZULEITUNG MIT EINEM ANSCHLUSSSTUTZEN**

(71) Anmelder: Oasis Engineering (2003) Ltd, Tauranga 3110 (NZ)
(72) Erfinder: Lasse Schulz-Hildebrandt, 24623 Großenaspe (DE)
(74) Vertreter: Glawe, Delfs, Moll

(57) **Zusammenfassung**

Aufnahmekupplungselement, insbesondere für eine Anschlusskupplung, zur Verbindung einer Fluidzuleitung mit einem Anschlussstutzen (9). Das Aufnahmekupplungselement umfasst einen Fluideinlass, einen Fluidauslass (18) zur Verbindung des Aufnahmekupplungselements mit dem Anschlussstutzen (9), einen Fluidkanal (70), der den Fluideinlass mit dem Fluidauslass (18) verbindet, eine Kupplungseinrichtung zur Verriegelung des Fluidauslasses (18) mit dem Anschlussstutzen (9), und ein in eine Schließstellung vorgespanntes Auslassventil (50) zur Unterbrechung eines Fluiddurchflusses durch den Fluidkanal (70). Das Auslassventil (50) ist durch Aufsetzen des Fluidauslasses (18) auf den Anschlussstutzen (9) von der Schließstellung in eine Öffnungsstellung bewegbar, wobei die Kupplungseinrichtung ein Schiebeelement (34) aufweist, das entlang einer Aufsetzrichtung zwischen einer den Anschlussstutzen (9) verriegelnden Verriegelungsposition und einer den Anschlussstutzen (9) freigebenden Freigabeposition verschiebbar ist. Erfindungsgemäß weist die Kupplungseinrichtung weiterhin eine druckgesteuerte Sicherheitseinrichtung (60, 61, 63, 64) auf, die mit dem Fluidkanal (70) fluidverbunden und dazu ausgebildet ist, eine Bewegung des Auslassventils (50) von der Schließstellung in die Öffnungsstellung zu blockieren, wenn im Fluidkanal (70) stromaufwärts des Auslassventils (50) ein Druck herrscht, der höher ist als ein erster Referenzdruck. Es wird so auf einfache Weise sichergestellt, dass das Auslassventil geschlossen bleibt, solange der Druck stromaufwärts des Auslassventils noch nicht abgebaut wurde. Die Bediensicherheit des Aufnahmekupplungselements wird dadurch erhöht.

## Beschreibung

Gegenstand der vorliegenden Erfindung ist ein Aufnahmekupplungselement, insbesondere für eine Anschlusskupplung, zur Verbindung einer Fluidzuleitung mit einem Anschlussstutzen.

Anschlusskupplungen mit einem Aufnahmekupplungselement zur Verbindung mit einem Anschlussstutzen kommen beispielsweise im Rahmen der sogenannten Druckbetankung zum Einsatz, bei der zwischen einem Fluidreservoir und einem Tank ein geschlossenes System hergestellt wird, indem die Anschlusskupplung im Wesentlichen fluiddicht mit dem Anschlussstutzen des Tanks verbunden wird. Dazu weist die Anschlusskupplung ein Aufnahmekupplungselement auf, in das der Anschlussstutzen eingeführt werden kann, um die Verbindung herzustellen. Das Fluid kann dann mit relativem Überdruck in den Tank eingebracht werden, ohne dass es am Übergang zwischen Anschlusskupplung und Anschlussstutzen zu einem Austreten des Fluids in die Umwelt kommen kann. Anschlusskupplungen dieser Art werden beispielsweise zum Ausbringen von verdichtetem Erdgas (CNG) oder verdichtetem Wasserstoff (H2) verwendet. Weiterhin können die Anschlusskupplungen sowohl für Flüssigkeiten als auch für verflüssigte Gase beispielsweise zum Ausbringen von Flüssiggas (LPG), verflüssigtem Erdgas (LNG) oder verflüssigtem Wasserstoff (LH2) verwendet werden. Insbesondere für die Betankung von Kraftfahrzeugen ist es wünschenswert, dass die Anschlusskupplungen für den Benutzer leicht und sicher zu handhaben sind.

Es die Aufgabe der vorliegenden Erfindung, eine Aufnahmekupplungselement, insbesondere für eine Anschlusskupplung, bereitzustellen, welches eine einfache und sichere Übertragung des Fluids ermöglicht. Gelöst wie diese Aufgabe mit den Merkmalen der unabhängigen Ansprüche. Vorteilhafte Ausführungsformen sind in den Unteransprüchen angegeben.

Demnach betrifft die Erfindung ein Aufnahmekupplungselement, insbesondere für eine Anschlusskupplung, zur Verbindung einer Fluidzuleitung mit einem Anschlussstutzen. Das Aufnahmekupplungselement umfasst einen Fluideinlass, einen Fluidauslass zur Verbindung des Aufnahmekupplungselements mit dem Anschlussstutzen und einen Fluidkanal, der den Fluideinlass mit dem Fluidauslass verbindet. Das Aufnahmekupplungselement umfasst weiterhin eine Kupplungseinrichtung zur Verriegelung des Fluidauslasses mit dem Anschlussstutzen und ein in eine Schließstellung vorgespanntes Auslassventil zur Unterbrechung eines Fluiddurchflusses durch den Fluidkanal. Das Auslassventil ist durch Aufsetzen des Fluidauslasses auf den Anschlussstutzen von der Schließstellung in eine Öffnungsstellung bewegbar. Die Kupplungseinrichtung weist ein Schiebeelement auf, das entlang einer Aufsetzrichtung zwischen einer den Fluidauslass am Anschlussstutzen verriegelnden Verriegelungsposition und einer den Anschlussstutzen freigebenden Freigabeposition verschiebbar ist. Erfindungsgemäß weist die Kupplungseinrichtung weiterhin eine druckgesteuerte Sicherheitseinrichtung auf, die mit dem Fluidkanal fluidverbunden und dazu ausgebildet ist, eine Bewegung des Auslassventils von der Schließstellung in die Öffnungsstellung zu blockieren, wenn im Fluidkanal stromaufwärts des Auslassventils ein Druck herrscht, der höher ist als ein erster Referenzdruck.

Zunächst werden einige im Rahmen der vorliegenden Offenbarung verwendete Begriffe erläutert. Beim Anschlussstutzen kann es sich insbesondere um den Anschlussstutzen eines Tanks handeln, in den ein Fluid eingebracht werden soll. Dazu kann der Fluidauslass auf den Anschlussstutzen aufgesetzt werden. Es wird dabei vorzugsweise eine fluiddichte Verbindung zwischen dem Anschlussstutzen und dem Fluidauslass hergestellt. Der Fluideinlass kann zur Verbindung mit der Fluidzuleitung ausgebildet sein. Die Fluidzuleitung kann beispielsweise ein Schlauch sein, über den das Fluid zugeführt wird. Das Aufnahmekupplungselement kann alternativ Bestandteil einer Anschlusskupplung sein, die ein Hauptventil und eine Betätigungseinrichtung aufweist. Die Anschlusskupplung kann einen Teilkanal aufweisen, der in den Einlass des Aufnahmekupplungselements mündet, so dass der Teilkanal und der Fluidkanal gemeinsam einen Hauptkanal der Anschlusskupplung bilden. Die Anschlusskupplung umfasst in dieser Ausführungsform weiterhin einen Fluidanschluss, an den die Fluidzuleitung angeschlossen werden kann. Das Hauptventil ist zur Steuerung eines Fluiddurchflusses durch den Hauptkanal ausgebildet. Die Betätigungseinrichtung ist zur Betätigung des Hauptventils und der Kupplungseinrichtung ausgestaltet.

Das Aufnahmekupplungselement kann insbesondere zur Druckbetankung eines Tanks ausgebildet sein. Bei den auszubringenden Fluiden kann es sich beispielsweise um LPG, LNG, CNG und/oder H2 handeln. Die Kupplungseinrichtung dient zur Verriegelung des Fluidauslasses am Anschlussstutzen, um nach der Herstellung der Verbindung ein unbeabsichtigtes Lösen zu verhindern. Das Schiebeelement kann insbesondere durch eine Schiebehülse gebildet sein.

Wenn das Fluid beim Herstellen einer Verbindung zwischen dem Aufnahmekupplungselement und dem Anschlussstutzen stromaufwärts des Auslassventils unter Druck steht, besteht die Gefahr, dass dieser Druck schlagartig entweicht, wenn das Auslassventil beim Aufsetzen auf den Anschlussstutzen in die Öffnungsstellung bewegt wird. Der schlagartige Druckabbau kann mit großen auf das Aufnahmekupplungselement wirkenden Kräften einhergehen, die zu Beschädigungen führen und eine Gefahr für den Benutzer darstellen können. Im Rahmen der Erfindung wird der stromaufwärts des Auslassventils herrschende Druck ausgenutzt, um eine Bewegung des Auslassventils von der Schließstellung in die Öffnungsstellung zu blockieren. Das Auslassventil kann daher erst dann durch Aufsetzen des Fluidauslasses auf den Anschlussstutzen geöffnet werden, wenn der Druck stromaufwärts des Auslassventils abgebaut wurde und die Bewegung des Auslassventils in die Öffnungsstellung von der Sicherheitseinrichtung freigegeben wird. Die Bediensicherheit kann dadurch auf einfache und zuverlässige Weise deutlich erhöht werden.

In einer Ausführungsform ist vorgesehen, dass die Sicherheitseinrichtung ein Blockierelement aufweist, das lateral zu einer Verschiebungsrichtung eines Ventilkörpers des Auslassventils bewegbar ist zwischen einer Freigabeposition, in der eine Bewegung des Auslassventils in die Öffnungsstellung freigegeben ist, und einer Blockierposition, in der die Bewegung des Auslassventils in die Öffnungsstellung blockiert ist. Die Verschiebungsrichtung kann im Wesentlichen der Aufsetzrichtung entsprechen, entlang derer der Fluidauslass auf den Anschlussstutzen aufgesetzt wird. Der Winkel zwischen der Bewegungsrichtung des Blockierelements relativ zur Verschiebungsrichtung kann mehr als 45°, insbesondere mehr als 70° betragen. Das Blockierelement kann insbesondere radial bzw. senkrecht zu der Verschiebungsrichtung bewegbar sein. Insbesondere kann der Winkel also im Wesentlichen 90° betragen. Auf diese Weise kann das Blockierelement auf einfache Weise in den Bewegungsweg des Ventilkörpers, welcher sich regelmäßig ebenfalls entlang der Aufsetzrichtung bewegt, hinein bewegt werden, um diesen zu blockieren.

Die Sicherheitseinrichtung kann zur Umwandlung des Drucks im Fluidkanal stromaufwärts des Auslassventils in eine lateral zu der Verschiebungsrichtung ausgerichtete Bewegung des Blockierelements ausgebildet sein. Möglich ist, dass die Sicherheitseinrichtung eine dem Druck im Fluidkanal ausgesetzte Angriffsfläche aufweist, durch die der Druck in eine mittelbar oder unmittelbar auf das Blockierelement ausgeübte Kraft umgewandelt wird. Die Kraft kann dazu ausgebildet sein, das Blockierelement in die Blockierposition zu drängen. In diesem Fall kann die Sicherheitseinrichtung wenigstens ein Rückstellelement aufweisen, das das Blockierelement in die Freigabeposition drängt. Die von der Angriffsfläche erzeugte Kraft und das wenigstens eine Rückstellelement können so aufeinander abgestimmt sein, dass das Blockierelement in die Freigabeposition bewegt wird, wenn der Druck stromaufwärts des Auslassventils den Referenzdruck unterschreitet oder diesem entspricht, und in die Blockierposition bewegt wird, wenn der Druck stromaufwärts des Auslassventils den Referenzdruck überschreitet.

In einer Ausführungsform weist die Sicherheitseinrichtung wenigstens ein Rückstellelement auf, das dazu ausgebildet ist, das Blockierelement in die Blockierposition zu drängen. Weiterhin kann die Sicherheitseinrichtung in dieser Ausführungsform ein Rückhalteelement aufweisen, das dazu ausgebildet ist, das Blockierelement in die Freigabeposition zu drängen. Das Rückhalteelement kann dazu wenigstens ein Rückstellelement aufweisen. Insbesondere kann das Rückhalteelement eine Kontaktfläche aufweisen, die gegen eine korrespondierende Kontaktfläche des Blockierelements drückt, um das Blockierelement in die Freigabeposition zu drängen. Die Sicherheitseinrichtung kann in diesem Fall eine dem Druck im Fluidkanal ausgesetzte Angriffsfläche aufweisen, durch die der Druck in eine mittelbar oder unmittelbar auf das Rückhalteelement ausgeübte Kraft umgewandelt wird, so dass die vom Rückhalteelement auf das Blockierelement ausgeübte Kraft reduziert wird. Auch in diesem Fall können die vom Rückstellelement, vom Rückhalteelement sowie die von der Angriffsfläche erzeugten Kräfte derart aufeinander abgestimmt sein, dass das Blockierelement in die Freigabeposition bewegt wird, wenn der Druck stromaufwärts des Auslassventils den Referenzdruck unterschreitet oder diesem entspricht, und in die Blockierposition bewegt wird, wenn der Druck stromaufwärts des Auslassventils den Referenzdruck überschreitet.

In einer Ausführungsform kann das Aufnahmekupplungselement weiterhin eine druckgesteuerte Arretiereinrichtung aufweisen, die dazu ausgebildet ist, das Schiebeelement in der Freigabeposition zu arretieren, wenn im Fluidkanal stromaufwärts des Auslassventils ein Druck herrscht, der höher ist als ein zweiter Referenzdruck. Durch die Arretierung der Schiebehülse in der Freigabeposition kann diese nicht mehr bewegt werden. Dies ist insbesondere dann von Vorteil, wenn das Aufnahmekupplungselement Teil einer Anschlusskupplung ist, die eine mit der Schiebehülse gekoppelte Betätigungseinrichtung aufweist. Durch das Arretieren der Schiebehülse kann diese von der Betätigungseinrichtung nicht mehr bewegt werden, um eine Verriegelung mit dem Anschlussstutzen herzustellen. Da bei aus dem Stand der Technik bekannten Anschlusskupplungen mit der Betätigungseinrichtung zuerst die Verriegelung hergestellt werden muss, bevor das Hauptventil geöffnet werden kann (siehe z.B. WO 2021/009283 A1), kann somit durch die vorstehend genannten Merkmale verhindert werden, dass das ebenfalls durch die Betätigungseinrichtung betätigbare Hauptventil geöffnet wird, solange stromaufwärts des Auslassventils ein Druck herrscht, der den zweiten Referenzdruck überschreitet. Der zweite Referenzdruck kann vom ersten Referenzdruck verschieden sein oder mit diesem übereinstimmen.

Die vorstehend beschriebene Idee, eine druckgesteuerte Arretiereinrichtung vorzusehen, die dazu ausgebildet ist, das Schiebeelement in der Freigabeposition zu arretieren, wenn im Fluidkanal stromaufwärts des Auslassventils ein Druck herrscht, der höher ist als ein zweiter Referenzdruck, weist gegebenenfalls eigenständigen erfinderischen Gehalt auf. Es ist also beim eingangs beschriebenen erfindungsgemäßen Aufnahmekupplungselement in diesem Fall insbesondere nicht erforderlich, dass die Kupplungseinrichtung des Aufnahmekupplungselements eine druckgesteuerte Sicherheitseinrichtung aufweist, die mit dem Fluidkanal fluidverbunden und dazu ausgebildet ist, eine Bewegung des Auslassventils von der Schließstellung in die Öffnungsstellung zu blockieren, wenn im Fluidkanal stromaufwärts des Auslassventils ein Druck herrscht, der höher ist als ein erster Referenzdruck.

Die druckgesteuerte Arretiereinrichtung kann alternativ oder zusätzlich dazu ausgebildet sein, das Schiebeelement in der Verriegelungsposition zu arretieren, wenn im Fluidkanal stromaufwärts des Auslassventils ein Druck herrscht, der höher ist als ein zweiter Referenzdruck. Die Verriegelung der Schiebehülse in der Arretierungsposition hat den Vorteil, dass die Verriegelung zwischen dem Fluidauslass und dem Anschlussstutzen aufrecht erhalten bleibt, solange stromaufwärts des Auslassventils noch ein Druck herrscht, der den zweiten Referenzdruck überschreitet. Damit wird verhindert, dass ein noch bestehender hoher Druck schlagartig entweichen kann, wenn das Aufnahmekupplungselement vom Anschlussstutzen gelöst wird.

Die Arretiereinrichtung kann zur Arretierung des Schiebeelements in der Verriegelungsposition und/oder in der Freigabeposition ein lateral zu einer Verschiebungsrichtung des Schiebeelements bewegbares Arretierelement aufweisen, das zum Eingriff in eine erste Arretieraussparung des Schiebeelements ausgebildet ist, wenn sich das Schiebeelement in der Freigabeposition befindet, und das zum Eingriff in eine zweite Arretieraussparung des Schiebeelements ausgebildet ist, wenn sich das Schiebeelement in der Verriegelungsposition befindet. Indem zwei Arretieraussparungen im Schiebeelement vorgesehen werden, kann dieses mit Hilfe desselben Arretierelements in den beiden verschiedenen Positionen arretiert werden, wodurch der Konstruktive Aufbau des Aufnahmekupplungselements deutlich vereinfacht wird. Wenn das Schiebelement als Schiebehülse ausgebildet ist, können die Arretieraussparungen insbesondere Arretieröffnungen in der Schiebehülse sein. In einer Ausführungsform kann weiterhin vorgesehen sein, dass das Rückhalteelement der Sicherheitseinrichtung ein Arretierelement der Arretiereinrichtung bildet. Dadurch ist eine besonders kompakte Bauweise des Aufnahmekupplungselements möglich.

Das Arretierelement kann zum Zusammenwirken mit einer dem Druck im Fluidkanal ausgesetzten Angriffsfläche ausgebildet sein, die dazu ausgebildet ist, den Druck im Fluidkanal stromaufwärts des Auslassventils in eine auf das Arretierelement ausgeübte Kraft umzuwandeln, um das Arretierelement (vorzugsweise entgegen einer Rückstellkraft eines Rückstellelements) in Eingriff mit der ersten oder zweiten Arretieraussparung zu bringen und dadurch das Schiebeelement in der Freigabeposition oder Verriegelungsposition zu arretieren. Die Angriffsfläche kann unmittelbar am Arretierelement ausgebildet sein. Möglich ist auch, dass die von der Angriffsfläche umgewandelte Kraft durch eines oder mehrere Vermittlungselemente auf das Arretierelement übertragen wird.

Die Arretiereinrichtung kann weiterhin ein Rückstellelement aufweisen, das dazu eingerichtet ist, das Arretierelement in eine Freigabestellung zu drängen. Das Rückstellelement kann sich in einem Zwischenraum zwischen einer Mittelachse des Aufnahmekupplungselements und der ersten oder zweiten Arretieraussparung befinden. Die Mittelachse kann mit einer zentralen Achse des Anschlussstutzens übereinstimmen, wenn das Aufnahmekupplungselement mit dem Anschlussstutzen verbunden ist. Gegenüber einer aus der US 2014/0264118 A1 bekannten Arretiereinrichtung hat die Positionierung des Rückstellelement zwischen der Mittelachse des Aufnahmekupplungselements und der ersten oder zweiten Arretieraussparung den Vorteil, dass Arretiereinrichtung besonders platzsparend realisiert werden kann. Insbesondere verbleibt der Bauraum auf der dem Rückstellelement gegenüberliegenden Seite der Mittelachse frei und kann beispielsweise für das vorstehend beschriebene Blockierelement verwendet werden. Die vorstehend beschriebene Positionierung des Rückstellelements in einem Zwischenraum zwischen der Mittelachse und der ersten und/oder zweiten Arretieraussparung weist gegebenenfalls eigenständigen erfinderischen Charakter auf, wobei es ausreichend ist, wenn die Arretiereinrichtung entweder zur Arretierung des Schiebeelements in der Verriegelungsposition oder zur Arretierung des Schiebeelements in der Freigabeposition ausgestaltet ist. Insbesondere ist es zur Realisierung der Erfindung nicht erforderlich, dass die Kupplungseinrichtung des Aufnahmekupplungselements, eine druckgesteuerte Sicherheitseinrichtung aufweist, die mit dem Fluidkanal fluidverbunden und dazu ausgebildet ist, eine Bewegung des Auslassventils von der Schließstellung in die Öffnungsstellung zu blockieren, wenn im Fluidkanal stromaufwärts des Auslassventils ein Druck herrscht, der höher ist als ein erster Referenzdruck.

In einer Ausführungsform ist der Fluidkanal mit der druckgesteuerten Arretiereinrichtung durch einen Druckübertragungskanal verbunden, der sich ausgehend von einer stromabwärts weisenden Stirnfläche in eine stromaufwärtige Richtung erstreckt. Ebenso kann der Fluidkanal mit der druckgesteuerten Sicherheitseinrichtung durch einen Druckübertragungskanal verbunden sein, der sich ausgehend von einer stromabwärts weisenden Stirnfläche in eine stromaufwärtige Richtung erstreckt. Die Arretiereinrichtung und die Sicherheitseinrichtung können durch denselben Druckübertragungskanal oder durch verschiedene Druckbetätigungskanäle mit dem Fluidkanal verbunden sein. Dadurch kann das Problem verringert werden, dass die Fluidverbindung zwischen dem Fluidkanal und der Sicherheitseinrichtung bzw. Arretiereinrichtung zu Verwirbelungen im Fluidkanal führt, die den Durchfluss des Fluids stören und unerwünscht sind. Die Idee, dass der Fluidkanal mit der druckgesteuerten Arretiereinrichtung und/oder mit der druckgesteuerten Sicherheitseinrichtung durch einen Druckübertragungskanal verbunden ist, der sich ausgehend von einer stromabwärts weisenden Stirnfläche in eine stromaufwärtige Richtung erstreckt, weist gegebenenfalls eigenständigen erfinderischen Charakter auf. Es ist also beim eingangs beschriebenen erfindungsgemäßen Aufnahmekupplungselement in diesem Fall insbesondere ausreichend, wenn die Kupplungseinrichtung entweder eine druckgesteuerte Sicherheitseinrichtung oder eine druckgesteuerte Arretiereinrichtung aufweist. Sofern das Aufnahmekupplungselement die druckgesteuerte Arretiereinrichtung aufweist, kann diese dazu ausgebildet sein, das Schiebeelement entweder in der Verriegelungsposition oder in der Freigabeposition zu arretieren.

Gegenstand der Erfindung ist weiterhin eine Anschlusskupplung, die ein erfindungsgemäßes Aufnahmekupplungselement umfasst. Das Aufnahmekupplungselement bildet insbesondere den Teil der Anschlusskupplung, der an den Anschlussstutzen anschließbar ist. Die Anschlusskupplung umfasst weiterhin einen Fluidanschluss, an den die Fluidzuleitung anschließbar ist, und einen Hauptkanal, der sich vom Fluidanschluss über den Einlass des Aufnahmekupplungselements bis zum Auslass des Aufnahmekupplungselements erstreckt. Weiterhin umfasst die Anschlusskupplung ein stromaufwärts des Auslassventils positioniertes Hauptventil zur Steuerung eines Fluiddurchflusses durch den Hauptkanal und eine Betätigungseinrichtung zur Betätigung der Kupplungseinrichtung und des Hauptventils. Die Anschlusskupplung kann durch weitere Merkmale, die vorstehend in Verbindung mit dem erfindungsgemäßen Aufnahmekupplungselement beschrieben wurden, fortgebildet werden. Die Betätigungseinrichtung kann insbesondere dazu eingerichtet sein, eine Verschiebung des Schiebeelements zu bewirken, um den Auslass am Anschlussstutzen zu verriegeln oder zu lösen. Weiterhin kann die Betätigungseinrichtung derart ausgestaltet sein, dass eine Betätigung des Hauptventils, insbesondere ein Öffnen des Hauptventils, erst nach dem Herstellen der Verriegelung ermöglicht wird. Dies kann auf grundsätzlich bekannte Weise realisiert werden (siehe z.B. WO 2021/009283 A1).

Die Erfindung wird nachfolgend anhand einer beispielhaften Ausführungsform unter Bezugnahme auf die beigefügten Zeichnungen erläutert. Es zeigen:
- Fig. 1:: eine dreidimensionale Seitenansicht einer erfindungsgemäßen Anschlusskupplung vor dem Herstellen einer Verbindung mit einem Anschlussstutzen;
- Fig. 2:: eine Seitenansicht der Anschlusskupplung der Figur 1 nach dem Herstellen einer Verbindung mit einem Anschlussstutzen;
- Fig. 3:: eine seitliche Schnittansicht der Anschlusskupplung der Figur 1 vor dem Aufsetzen der Anschlusskupplung auf den Anschlussstutzen;
- Fig. 4:: eine Seitenansicht eines in der Ausführungsform der Figur 1 verwendeten Nutkurvenrings;
- Fig. 5:: eine seitliche Schnittansicht der Anschlusskupplung der Figur 1 entlang einer gegenüber Figur 3 verschiedenen Schnittebene;
- Fig. 6:: die Ansicht der Figur 3 nach dem Aufsetzen der Anschlusskupplung auf den Anschlussstutzen;
- Fig. 7:: die Ansicht der Figur 3 nach dem Aufsetzen der Anschlusskupplung auf den Anschlussstutzen und nach Betätigung des Hauptventils;
- Fig. 8:: eine seitliche Schnittansicht der Anschlusskupplung der Figur 1 entlang einer gegenüber den Figuren 3 und 5 verschiedenen Schnittebene in einem ersten Zustand;
- Fig. 9:: ein vergrößerter Ausschnitt aus der Figur 8;
- Fig. 10:: eine Querschnittansicht entlang einer Ebene, die durch die in Figur 9 gezeigte Linie B-B verläuft;
- Fig. 11:: eine seitliche Schnittansicht der Anschlusskupplung der Figur 1 entlang einer gegenüber den Figuren 3 und 5 verschiedenen Schnittebene in einem zweiten Zustand;
- Fig. 12:: ein vergrößerter Ausschnitt aus der Figur 11;
- Fig. 13:: der in Figur 9 gezeigte Ausschnitt in einem anderen Zustand des Aufnahmekupplungselements;
- Fig. 14:: der in Figur 12 gezeigte Ausschnitt in einem anderen Zustand des Aufnahmekupplungselements;
- Fig. 15:: eine schematische Darstellung einer Sicherheitseinrichtung gemäß einer alternativen Ausführungsform eines erfindungsgemäßen Aufnahmekupplungselements.

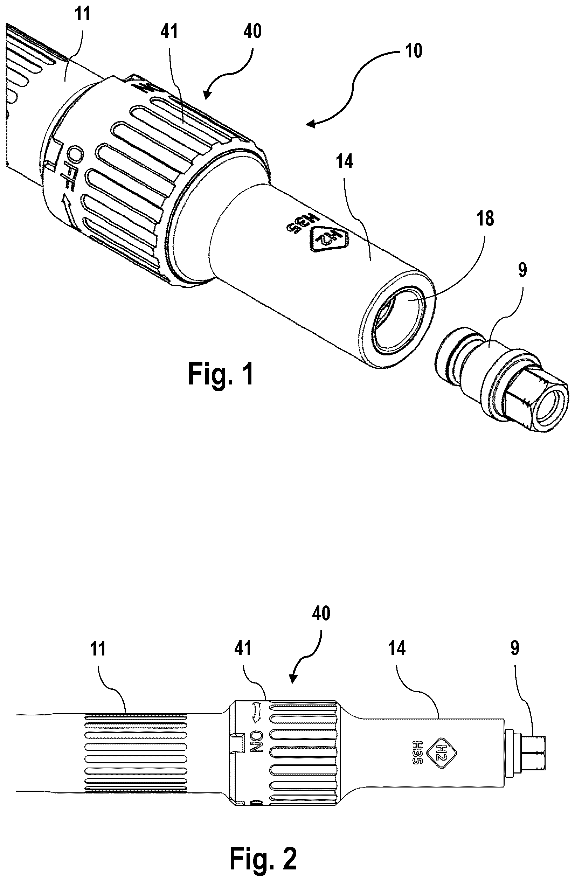

Figur 1 zeigt eine erfindungsgemäße Anschlusskupplung 10 in einer dreidimensionalen Seitenansicht vor dem Herstellen einer Verbindung mit einem Anschlussstutzen 9. Die Anschlusskupplung ist zur Ausbringung von komprimiertem Wasserstoff ausgebildet. Die Anschlusskupplung umfasst ein Gehäuse mit einem hinteren Gehäuseteil 11 und einem vorderen Gehäuseteil 14. Innerhalb des vorderen Gehäuseteils 14 befindet sich ein erfindungsgemäßes Aufnahmekupplungselement mit einem Fluidauslass 18, der auf den Anschlussstutzen 9 entlang einer Aufsetzrichtung, die der Axialrichtung des Anschlussstutzens 9 entspricht, aufgesetzt werden kann. Die Anschlusskupplung kann also insgesamt mit dem Anschlussstutzen 9 verbunden werden, indem der Anschlussstutzen 9 entlang seiner Axialrichtung in eine Aufnahme des Fluidauslasses 18 eingesetzt wird.

Die Anschlusskupplung umfasst weiterhin eine Betätigungseinrichtung 40 mit einem Griffelement 41. Das Griffelement 41 umgibt einen Außenabschnitt des Gehäuses 10 und ist relativ zum Gehäuse 10 drehbar ausgestaltet. Eine Drehachse des Griffelements 41 ist entlang der Axialrichtung des Fluidauslasses 18 ausgerichtet. Ein Benutzer kann das Griffelement 41 mit einer Hand umgreifen und auf diese Weise einfach auf den Anschlussstutzen 9 aufstecken. Durch eine Drehung des Griffelements 41 kann der Benutzer anschließend eine Kupplungseinrichtung 30 und ein Hauptventil der Anschlusskupplung betätigen, was nachfolgend im Detail erläutert wird. Da eine Drehachse des Griffelements der Richtung entspricht, entlang der die Anschlusskupplung auf den Anschlussstutzen aufgesetzt wird, entstehen beim Betätigen der Betätigungseinrichtung 40 relativ zur axialen Erstreckung des Anschlussstutzens 9 keine Kippmomente, wodurch die Bedienung erleichtert wird.

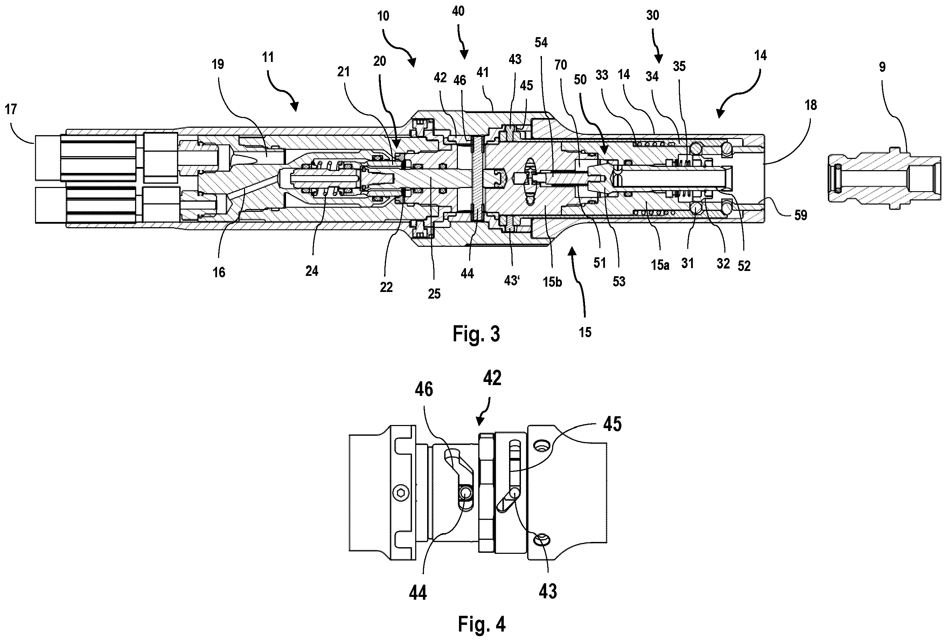

Figur 2 zeigt eine Seitenansicht der Anschlusskupplung der Figur 1 nach dem Aufsetzen der Anschlusskupplung auf den Anschlussstutzen 9. Während des Aufsetzens wurde ein vorderes Ende des Anschlussstutzens 9 in eine Aufnahme des Fluidauslasses 18 eingeführt. Dieser Vorgang wird nachfolgend anhand der Figuren 3 und 4 genauer erläutert.

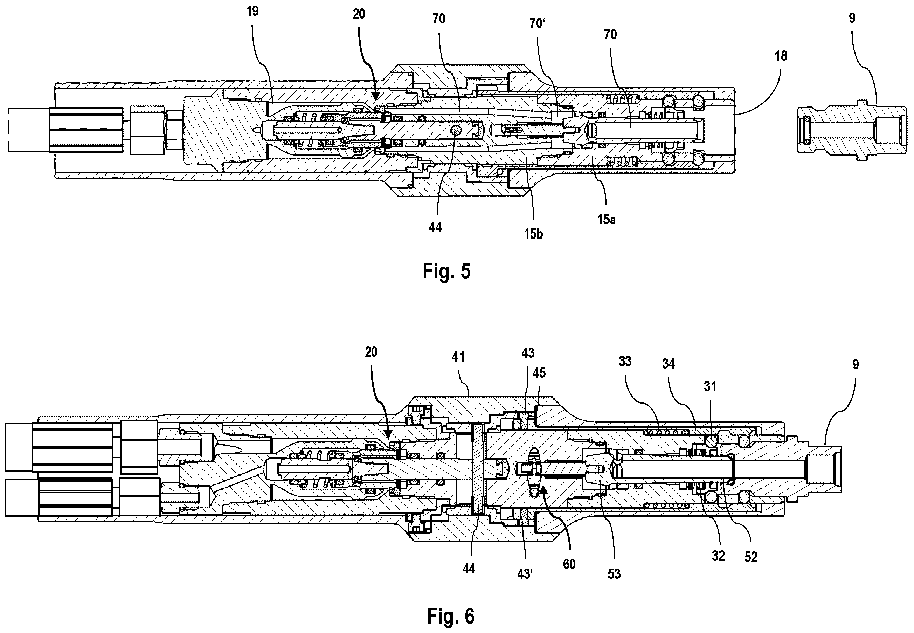

Figur 3 zeigt eine seitliche Schnittansicht der Anschlusskupplung der Figur 1 vor dem Herstellen einer Verbindung mit dem Anschlussstutzen 9. In dieser Ansicht ist ein am hinteren Gehäuseteil 11 befindlicher Fluidanschluss 17 erkennbar, an den eine Fluidzuleitung angeschlossen werden kann. Im vorderen Gehäuseteil 14 befindet sich das erfindungsgemäße Aufnahmekupplungselement. Durch den hinteren Gehäuseteil 11 erstreckt sich ein Teilkanal 19 ausgehend vom Fluidanschluss 17 bis zu einem Hauptventil 20. Hinter dem Hauptventil 20 geht der Teilkanal 19 über einen Einlass des Aufnahmekupplungselements in einen Fluidkanal 70 über (siehe auch Figur 5). Der Fluidkanal 70 erstreckt sich vom Einlass des Aufnahmekupplungselements bis zum Fluidauslass 18. Zusammen bilden der Teilkanal 19 und der Fluidkanal 70 einen Hauptkanal der Anschlusskupplung. Mithilfe des Hauptventils 20 kann ein Fluiddurchfluss durch die Anschlusskupplung gesteuert werden.

Innerhalb des Aufnahmekupplungselements befindet sich ein Auslassventil 50 mit einem Ventilkörper 53, der mit einer stromaufwärts weisenden Ventilstange 54 verbunden ist. Der Ventilkörper 53 weist zudem einen stromabwärts weisenden Rohrfortsatz 52 auf, durch den das Medium bei geöffnetem Auslassventil 50 hindurchgeleitet wird. Der Ventilkörper 53 wird durch ein Rückstellelement 51 gegen einen Ventilsitz gedrängt. In dem in Figur 3 gezeigten Zustand befindet sich das Auslassventil 50 in einer Schließstellung, in der der Ventilkörper 53 dichtend am Ventilsitz anliegt. Auch das Hauptventil 20 ist in einer Schließstellung, in der ein Hauptventilkörper 21 dichtend an einem Hauptventilsitz 22 anliegt. Der Hauptventilkörper 21 wird durch eine Schließfeder 24 in die Schließstellung gedrängt. Mit dem Hauptventilkörper 21 ist zudem eine stromabwärts weisende Ventilstange 25 verbunden.

In der Ansicht der Figur 3 ist weiterhin erkennbar, dass die Betätigungsvorrichtung 40 zusätzlich zum Griffelement 41 einen drehfest mit dem Griffelement 41 verbundenen Nutkurvenring 42 umfasst. Der Nutkurvenring 42 weist eine erste Nutkurve 45 und eine zweite Nutkurve 46 auf, die in der Schnittansicht der Figur 3 als Öffnungen erkennbar sind. In Figur 4 ist eine Seitenansicht des Nutkurvenrings 42 gezeigt, in der die Nutkurven 45, 46 besser sichtbar sind. Ein erster Betätigungszapfen 43 greift in die erste Nutkurve 45 ein und ein zweiter Betätigungszapfen 44 greift in die zweite Nutkurve 46 ein. Jede der Nutkurven 45, 46 weist auf einer bezüglich der Drehachse gegenüberliegenden Seite des Nutkurvenrings 42 eine korrespondierende Nutkurve auf, die bezüglich der Drehachse spiegelsymmetrisch ausgebildet ist. Der Betätigungszapfen 44 erstreckt sich durch das Innere des Gehäuses 10 und greift mit seinen Enden in die Nutkurve 46 und die gegenüberliegende korrespondierende Nutkurve ein. Der Betätigungszapfen 43 greift nur in die Nutkurve 45 ein, wobei bezogen auf die Drehachse gegenüberliegend ein korrespondierender Betätigungszapfen 43` vorhanden ist, der in die korrespondierende Nutkurve eingreift. Bei einer Drehung des Griffelements werden die Betätigungszapfen 44, 43, 43` sequenziell (also zeitlich versetzt zueinander) entlang der Drehachse verschoben, um nacheinander die Kupplungseinrichtung 30 und das Hauptventil 20 zu betätigen.

Der Betätigungszapfen 44 wird ausgehend von der in Figur 3 gezeigten Position durch eine Betätigung des Griffelements 41 relativ zum Gehäuse der Anschlusskupplung stromaufwärts verschoben, wodurch eine entsprechende Verschiebung des damit verbundenen Ventilkolbens 25 bewirkt wird. Der Hauptventilkörper 21 wird dadurch aus dem Hauptventilsitz 22 herausgehoben und das Hauptventil 20 geöffnet.

Die Kupplungseinrichtung 30 befindet sich an einem (bezogen auf den Fluidstrom) stromabwärtigen Ende des Gehäuses 10 und umfasst eine Schiebehülse 34, vier kugelförmig ausgebildete Verriegelungselemente 31 und ein Sperrglied 32, das durch ein Rückstellelement 35 in eine stromabwärtige Richtung vorgespannt ist. Die Schiebehülse 34 wird ebenfalls durch ein Rückstellelement 33 stromabwärts gedrängt. In dem in Figur 3 gezeigten Zustand befinden sich die Verriegelungselemente 31 in Aussparungen, die innerhalb eines vorderen Kupplungskörperteils 15a gebildet sind. Die Verriegelungselemente 31 greifen außerdem in eine Aussparung der Schiebehülse 34 ein, wobei zumindest einige der Verriegelungselemente 31 durch das Sperrglied 32 an einer radial nach innen gerichteten Bewegung gehindert werden. Die Verriegelungselemente 31 verhindern auf diese Weise eine stromabwärtige Bewegung der Schiebehülse 34.

Die Betätigungszapfen 43, 43` stehen mit einem stromaufwärtigen Endbereich der Schiebehülse 34 in Eingriff. Bei einer Betätigung des Griffelements 41 werden die Betätigungszapfen 43, 43` ausgehend von der in Figur 3 gezeigten Stellung in Richtung stromabwärts verschoben, wodurch die Schiebehülse 34 entsprechend stromabwärts verschoben wird. Dies wird in Verbindung mit Figur 6 näher erläutert.

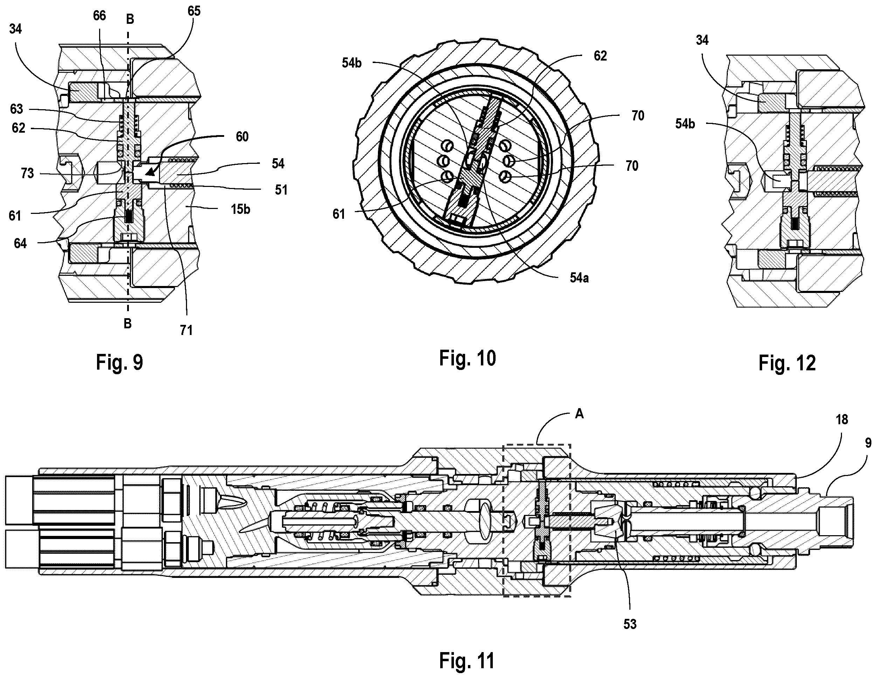

Figur 5 zeigt eine seitliche Schnittansicht der Anschlusskupplung der Figur 1 vor dem Herstellen einer Verbindung mit dem Anschlussstutzen 9 entlang einer Schnittebene, die gegenüber der Schnittebene der Figur 3 um 90° gekippt ist. In dieser Schnittansicht ist erkennbar, dass der Teilkanal 19 hinter dem Hauptventil 20 in den Fluidkanal 70 übergeht. Zudem ist erkennbar, dass sich der Fluidkanal 70 durch ein Kupplungskörperteil 15b und das Kupplungskörperteil 15a des Aufnahmekupplungselements hindurch bis zum Fluidauslass 18 erstreckt. Der Fluidkanal 70 weist insgesamt sechs separate Teilfluidkanäle auf, von denen in Figur 5 zwei sichtbar sind. Die sechs Teilfluidkanäle 70 sind in der Schnittansicht der Figur 10 erkennbar. Die sechs Teilfluidkanäle münden in einen Ringraum 70` vor dem Ventilkörper 53 des Auslassventils 50.

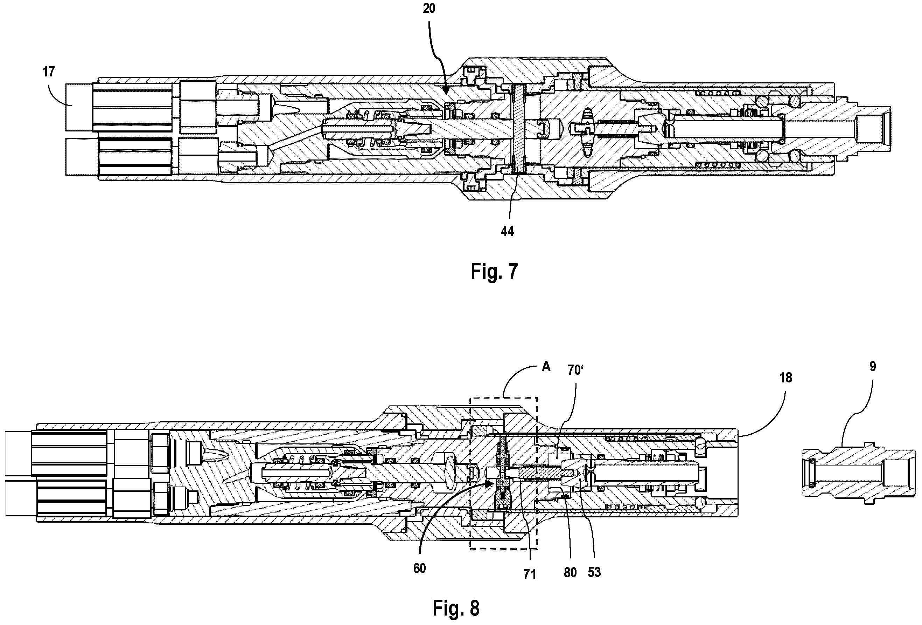

Figur 6 zeigt eine seitliche Schnittansicht der Anschlusskupplung der Figur 1 nach dem Herstellen einer Verbindung mit dem Anschlussstutzen 9 entlang der bereits in Figur 3 gezeigten Schnittebene. Beim Aufsetzen des Fluidauslasses 18 auf den Anschlussstutzen 9 greift das stromabwärtige Ende des Rohrfortsatzes 52 dichtend in eine Aufnahme des Anschlussstutzens 9 ein und kommt an einem in der Aufnahme gebildeten Anschlag zum Liegen. Bei einer weiteren Bewegung der Anschlusskupplung in Richtung Anschlussstutzen 9 wird der Rohrfortsatz 52 zusammen mit dem Sperrglied 32 relativ zum Gehäuseteil 15 stromaufwärts bewegt. Dadurch wird einerseits der Ventilkörper 53 aus seinem Dichtsitz gehoben und dadurch das Auslassventil 50 in eine Öffnungsstellung bewegt. Andererseits ermöglicht die Verschiebung des Sperrglieds 32 den Verriegelungselementen 31, radial nach innen auszuweichen und so eine stromabwärts gerichtete Bewegung der Schiebehülse 34 zu ermöglichen. In einem Bereich zwischen dem Auslassventil 50 und dem Hauptventil 20 weist das Aufnahmekupplungselement eine druckgesteuerte Sicherheitseinrichtung 60 auf, die dazu ausgestaltet ist, eine Bewegung des Auslassventils 50 von der Schließstellung in die Öffnungsstellung zu blockieren, wenn stromaufwärts des Auslassventils 50 ein Druck herrscht, der größer ist als ein Referenzdruck. Die Funktionsweise der Sicherheitseinrichtung 60 wird in Verbindung mit den Figuren 8 bis 14 näher erläutert. Bei der nachfolgenden Beschreibung der Figuren 6 und 7 wird davon ausgegangen, dass ein Druck stromaufwärts des Auslassventils den Referenzdruck nicht überschreitet.

Nach dem Aufsetzen der Fluidauslasses 18 auf den Anschlussstutzen 9 kann das Griffelement 41 betätigt (um seine Drehachse gedreht) werden, so dass die Betätigungszapfen 43, 43' aufgrund des Zusammenwirkens mit der Nutkurve 45 zusammen mit der Schiebehülse 34 in axialer Richtung stromabwärts in die in Figur 6 gezeigte Verriegelungsposition verschoben werden. Da die Schiebehülse 34 durch das Rückstellelement 33 stromabwärts vorgespannt ist, wird die Verschiebung der Schiebehülse 34 unterstützt oder kann nach dem Aufsetzen des Fluidauslasses 18 auf den Anschlussstutzen 9 sogar automatisch erfolgen. Auch in letzterem Fall wird im Rahmen der vorliegenden Offenbarung davon gesprochen, dass die Kupplungseinrichtung von der Betätigungseinrichtung betätigt wird.

Während einer Drehung des Griffelements 41 und des damit drehfest verbundenen Nutkurvenrings 42 laufen die Betätigungszapfen 43, 43` entlang der Nutkurve 45. In Figur 6 ist zu sehen, dass die Position des Betätigungszapfens 44 sich durch den Vorgang des Aufsetzens auf den Anschlussstutzen 9 (gegenüber der in Figur 3 gezeigten Position) nicht verändert hat. Das Hauptventil 20 befindet sich daher noch immer in einer Schließposition. Die Nutkurven 45, 46 sind derart ausgestaltet, dass bei einer Drehung des Griffelements 41 ausgehend von einer Ausgangsstellung, in der das Hauptventil geschlossen und der Anschlussstutzen vom Fluidauslass 18 gelöst ist, bis zu einer Endstellung, in der das Hauptventil geöffnet und der Anschlussstutzen am Fluidauslass 18 verriegelt ist, zuerst eine Verriegelung stattfindet und erst anschließend das Hauptventil geöffnet wird. Ausgehend von dem in Figur 6 gezeigten Zustand führt eine weitere Drehung des Griffelements 41 zu einer Öffnung des Hauptventils 20. Dies ist in der Figur 7 illustriert.

Figur 7 zeigt eine seitliche Schnittansicht der Anschlusskupplung der Figur 1 nach dem Herstellen einer Verbindung mit dem Anschlussstutzen 9 und nach dem Öffnen des Hauptventils 20. Insbesondere ist erkennbar, dass der Betätigungszapfen 44 zusammen mit der Ventilstange 25 und dem Hauptventilkörper 21 gegenüber dem in Figur 6 gezeigten Zustand nach links verschoben wurde, wodurch der Hauptventilkörper 21 aus dem Hauptventilsitz 22 herausgehoben wurde. Das über den Fluidanschluss 17 unter Druck zugeführte Fluid kann nun über den Anschlussstutzen 9 beispielsweise in einen Tank eingebracht werden.

Figur 8 zeigt eine seitliche Schnittansicht der Anschlusskupplung der Figur 1 entlang einer gegenüber den Figu-ren 3 und 5 verschiedenen Schnittebene. In Figur 8 befindet sich die Anschlusskupplung im Zustand der Figuren 3 und 4. Der Fluidauslass 18 wurde also noch nicht auf den Anschlussstutzen 9 aufgesetzt und das Hauptventil 20 sowie das Auslassventil 50 sind geschlossen. Zudem ist ein Bereich zwischen dem Hauptventil 20 und dem Auslassventil 50 durch eine aus dem Stand der Technik grundsätzlich bekannte und hier nicht näher erläuterte Entlüftungseinrichtung entlüftet, so dass der Druck in diesem Bereich niedriger ist als ein Referenzdruck. In Figur 8 ist in dem durch ein gestricheltes Rechteck markierten Bereich A die Sicherheitseinrichtung 60 dargestellt.

In Figur 9 ist der in Figur 8 markierte Bereich A vergrößert gezeigt. Zu sehen ist, dass die Sicherheitseinrichtung 60 ein Blockierelement 61 umfasst, das in eine im Kupplungskörperteil 15b befindliche radial ausgerichtete Bohrung eingesetzt, in radialer Richtung bewegbar und durch ein Rückstellelement 64 radial nach innen (in Figur 9 nach oben) in eine Blockierposition vorgespannt ist. Die Sicherheitseinrichtung 60 umfasst weiterhin ein Rückhalteelement 62, das ebenfalls in eine radial ausgerichtete Bohrung eingesetzt und in radialer Richtung bewegbar ist. Die Bohrungen, in die das Blockierelement 61 und das Rückhalteelement 62 eingesetzt sind, liegen einander bezogen auf eine Mittelachse des Kupplungskörperteils (die entlang der Aufsetzrichtung verläuft) gegenüber. Das Rückhalteelement 62 wird durch ein Rückstellelement 63 radial nach innen gedrängt. In dem in den Figuren 8 gezeigten Zustand liegt das Blockierelement 61 mit einer Kontaktfläche an einer korrespondierenden Kontaktfläche des Rückhalteelements 62 an. Das Rückstellelement 63 hat eine größere Rückstellkraft als das Rückstellelement 64, so dass das Blockierelement 61 in dem in Figur 9 gezeigten Zustand vom Rückhalteelement nach unten gedrückt und in der Freigabeposition gehalten wird.

In den Figuren 8 und 9 ist weiterhin erkennbar, dass sich ausgehend von einer stromabwärts weisenden Stirnfläche 80 des Ringraums 70' ein Ventilschaftraum 71 in Richtung der Sicherheitseinrichtung 60 erstreckt. Der Ventilschaftraum 71 wird im Wesentlichen vom Ventilschaft 54 und dem diesen umgebenden Rückstellelement 51 eingenommen. Allerdings findet über den Ventilschaftraum 71 ein Druckausgleich vom Ringraum 70` bis zur Sicherheitseinrichtung 60 statt. Insbesondere ist eine Angriffsfläche 73 dem Druck ausgesetzt, der sich im Ringraum (also zwischen dem Auslassventil 50 und dem Hauptventil 20) und im Ventilschaftraum 71 einstellt. Im Zustand der Figuren 8 und 9 ist dieser Druck geringer als der Referenzdruck. Der Ventilschaftraum 71 bildet einen Druckübertragungskanal im Sinne der vorliegenden Offenbarung. Indem der Ventilschaftraum sich ausgehend von der stromabwärts weisenden Stirnfläche 80 in eine stromaufwärts gerichtete Richtung erstreckt, werden Verwirbelungen und Druckfluktuationen im Fluidkanal reduziert.

Figur 10 zeigt eine Querschnittsansicht der Sicherheitseinrichtung 60 entlang einer Ebene, die durch die in Figur 9 gezeigte Linie B-B verläuft und senkrecht zur Mittelachse bzw. zur Aufsetzrichtung des Aufnahmekupplungselements ausgerichtet ist. In dieser Ansicht ist erkennbar, dass der Ventilschaft 54 des Auslassventils 50 zwei Stege 54a, 54b aufweist, die in dem in Figuren 8 bis 10 gezeigten Zustand entlang der Mittelachse seitlich am Blockierelement 61 und am Rückhalteelement 62 vorbei bewegbar sind. Beim Aufsetzen des Fluidauslasses 18 auf den Anschlussstutzen 9 kann der Ventilkörper 53 daher zusammen mit dem Ventilschaft 54 aus dem Ventilsitz gehoben und stromaufwärts verschoben werden, wobei die Stege 54a, 54b dabei an dem Blockierelement 61 und dem Rückhalteelement 62 seitlich vorbei bewegt werden.

Figur 11 zeigt die eine seitliche Querschnittsansicht der Figur 8 nach dem Aufsetzen des Fluidauslasses 18 auf den Anschlussstutzen 9. Figur 12 zeigt den in Figur 11 markierten Bereich A in einer vergrößerten Ansicht. Der Auslassventilkörper 53 konnte in die Öffnungsstellung bewegt werden, da die Stege 52a, 52b seitlich am Blockierelement 61 und am Rückhalteelement 62 vorbei bewegt wurden.

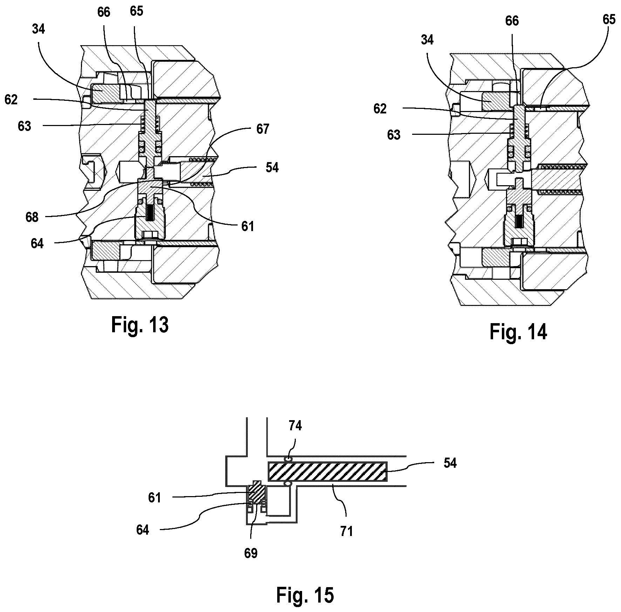

Ausgehend von dem in Figur 8 gezeigten Zustand kann es grundsätzlich zu einer Druckerhöhung zwischen dem Hauptventil 20 und dem Auslassventil 50 kommen, beispielsweise wenn eine Fehlfunktion des Hauptventils oder der nicht dargestellten Entlüftungseinrichtung vorliegt. Dadurch ist es möglich, dass der Druck im Ringraum 70` und im Druckübertragungskanal 71 den Referenzdruck übersteigt. Dieser Druck wirkt auf die Angriffsfläche 73, wodurch das Rückhalteelement 62 entgegen der Kraft des Rückstellelements 63 radial nach außen gedrückt wird. Die vom Rückhalteelement 62 auf das Blockierelement 61 ausgeübte Kraft fällt dadurch weg, so dass das Blockierelement 61 vom Rückstellelement 64 radial nach innen in eine Blockierposition bewegt wird. Die Druckänderung im Druckübertragungskanal 71 führt in diesem Fall also mittelbar zu einer auf das Blockierelement ausgeübten Kraft. Das Blockierelement 61 selbst ist druckausgeglichen oder zumindest soweit druckausgeglichen, dass eine unmittelbar auf das Blockierelement 61 wirkende Kraft, die aus einer Druckveränderung im Druckübertragungskanal 71 resultiert, die Bewegung des Blockierelements 61 in die Blockierposition nicht verhindert. "Durchausgeglichen" bedeutet hier, dass eine Druckveränderung im Druckübertragungskanal 71 keine unmittelbar auf das Blockierelement 61 wirkende Kraft verursacht. Dies kann beispielsweise durch einen in den Figu-ren nicht dargestellten Druckausgleichskanal erfolgen, der vom Druckübertragungskanal 71 zu einer Angriffsfläche des Blockierelements 61 führt. Das Resultat ist in Figur 13 illustriert, die den Bereich A in einer vergrößerten Ansicht darstellt, nachdem ausgehend vom Zustand der Figur 8 eine Druckerhöhung stattgefunden hat. Es ist erkennbar, dass eine stromabwärts weisende Seitenfläche 67 des Blockierelements 61 gegen einen Absatz 68 des Ventilschafts 54 anliegt. Dadurch wird eine stromaufwärtige Bewegung des Ventilschafts 54 blockiert, so dass das Auslassventil 50 nicht geöffnet und der Fluidauslass 18 nicht oder zumindest nicht vollständig auf den Anschlussstutzen 9 aufgesetzt werden kann. Auf diese Weise wird ein für den Benutzer gefährliches schlagartiges Entweichen des Drucks im Fluidkanal 70 zwischen dem Hauptventil 20 und dem Auslassventil 50 verhindert und die Betriebssicherheit erhöht.

In den Figuren 9, 12 und 13 ist weiterhin erkennbar, dass die Schiebehülse 34 zwei Arretieröffnungen 65, 66 aufweist, wobei ein oberes Ende des Rückhalteelements 62 zum Eingriff in die Arretieröffnungen 65, 66 ausgestaltet ist. Die erste Arretieröffnung 65 ist derart positioniert, dass sie mit dem oberen Ende des Rückhalteelements 62 fluchtet, wenn die Schiebehülse sich in der Freigabeposition befindet (siehe Figuren 8, 9 und 13). Wenn sich also die Schiebehülse 34 in der Freigabeposition befindet und gleichzeitig im Fluidkanal 70 ein Druck entsteht, der den Referenzdruck übersteigt, wird die Schiebehülse 34 durch den Eingriff des oberen Endes des Rückhalteelements 62 in der Freigabeposition arretiert. Das Rückhalteelement 62 kann somit gleichzeitig als ein Arretierelement im Sinne der vorliegenden Offenbarung angesehen werden und bildet zusammen mit dem Rückstellelement 63 eine druckgesteuerte Arretiereinrichtung im Sinne der vorliegenden Offenbarung. Die Idee, das Rückhalteelement 62 der Sicherheitseinrichtung 60 gleichzeitig als Arretierelement der Arretiereinrichtung zu verwenden, ist besonders vorteilhaft, da dies eine sehr kompakte Bauweise ermöglicht. Durch die Arretierung des Schiebeelements 34 wird verhindert, dass das Griffelement 41 betätigt werden kann, so dass auch eine Betätigung des Hauptventils 20 unterbunden wird. Dadurch wird im Falle einer Fehlfunktion eine zusätzliche Sicherheit geschaffen.

Wird hingegen ausgehend von dem Zustand der Figuren 11 und 12 (also nach einem erfolgreichen Verriegeln des Fluidauslasses am Anschlussstutzen 9) das Hauptventil 20 durch eine Betätigung des Griffelements 41 geöffnet, kommt es im Fluidkanal 70 aufgrund des dann erfolgenden Durchflusses des unter Druck stehenden Fluids zu einer Druckerhöhung, die über den Druckübertragungskanal 71 zur Angriffsfläche 73 übertragen wird. Dadurch wird das das Rückhalteelement (Arretierelement) 62 entgegen der Rückstellkraft des Rückstellelements 63 in Eingriff mit der zweiten Arretieröffnung 66 gebracht und die Schiebehülse 34 dadurch arretiert (siehe Figur 14). Es wird dadurch verhindert, dass die Schiebehülse 34 von der Verriegelungsposition in die Freigabeposition bewegt werden kann, solange der Druck im Fluidkanal 70 zwischen dem Auslassventil 50 und dem Hauptventil 20 nicht unter den Referenzdruck reduziert wurde.

In dem in Figur 14 gezeigten Zustand ist das Arretierelement (Rückhalteelement) 62 vom Blockierelement 14 abgehoben. Das Blockierelement 61 wird in diesem Zustand allerdings nicht vom Rückstellelement 64 in die Blockierposition bewegt, da es mit einer radial nach innen weisenden Fläche am Ventilschaft 54 anliegt.

Auch wenn in der vorliegenden beispielhaften Ausführungsform die Sicherheitseinrichtung 60 und die Arretiereinrichtung in einer integrierten Form realisiert sind, in der einige Elemente sowohl der Sicherheitseinrichtung 60 als auch der Arretiereinrichtung zuzuordnen sind, ist für den Fachmann anhand der vorliegenden Beschreibung ersichtlich, dass die Sicherheitseinrichtung in einer alternativen Ausführungsform auch separat von der Arretiereinrichtung realisiert werden kann. Insbesondere ist es nicht zwangsläufig erforderlich, dass das Rückhalteelement 62 zum Eingriff in die Arretieröffnungen 65, 66 ausgestaltet ist. Denkbar ist zudem, dass ein von der Sicherheitseinrichtung 60 separates Arretierelement 62 bereitgestellt wird, das die vorstehend beschriebenen Funktionen auf gleiche Weise erfüllen kann.

Figur 15 zeigt eine schematische Sicherheitseinrichtung 60, die bei einer alternativen Ausführungsform eines erfindungsgemäßen Aufnahmekupplungselements zum Einsatz kommen kann. Das Rückstellelement 64 ist in dieser Ausführungsform dazu ausgebildet, das Blockierelement 61 radial nach außen in die Freigabeposition zu bewegen. Zudem erstreckt sich vorliegend der Druckübertragungskanal 71 bis zu einer radial außen liegenden Angriffsfläche 69 des Blockierelements 61, wobei der Druckübertragungskanal 71 von radial innen liegenden Flächen des Blockierelements 61 durch ein Dichtelement 74 abgedichtet ist. Bei einer Drückerhöhung im Fluidkanal 70 wird das Blockierelement 61 aufgrund des über den Druckübertragungskanal 71 auf die Angriffsfläche 69 ausgeübten Drucks in eine Blockierposition bewegt, in der ein Bewegungsweg des Ventilschafts 54 blockiert ist.

## Patentansprüche

1. Aufnahmekupplungselement, insbesondere für eine Anschlusskupplung, zur Verbindung einer Fluidzuleitung mit einem Anschlussstutzen (9), umfassend:
einen Fluideinlass;
einen Fluidauslass (18) zur Verbindung des Aufnahmekupplungselements mit dem Anschlussstutzen (9);
einen Fluidkanal (70), der den Fluideinlass mit dem Fluidauslass (18) verbindet;
eine Kupplungseinrichtung zur Verriegelung des Fluidauslasses (18) mit dem Anschlussstutzen (9); und
ein in eine Schließstellung vorgespanntes Auslassventil (50) zur Unterbrechung eines Fluiddurchflusses durch den Fluidkanal (70),
wobei das Auslassventil (50) durch Aufsetzen des Fluidauslasses (18) auf den Anschlussstutzen (9) von der Schließstellung in eine Öffnungsstellung bewegbar ist,
wobei die Kupplungseinrichtung ein Schiebeelement (34) aufweist, das entlang einer Aufsetzrichtung zwischen einer den Fluidauslass (18) am Anschlussstutzen (9) verriegelnden Verriegelungsposition und einer den Anschlussstutzen (9) freigebenden Freigabeposition verschiebbar ist, **dadurch gekennzeichnet, dass**
die Kupplungseinrichtung weiterhin eine druckgesteuerte Sicherheitseinrichtung (60) aufweist, die mit dem Fluidkanal (70) fluidverbunden und dazu ausgebildet ist, eine Bewegung des Auslassventils (50) von der Schließstellung in die Öffnungsstellung zu blockieren, wenn im Fluidkanal (70) stromaufwärts des Auslassventils (50) ein Druck herrscht, der höher ist als ein erster Referenzdruck.

2. Aufnahmekupplungselement nach Anspruch 1, bei dem die Sicherheitseinrichtung ein Blockierelement (61) aufweist, das lateral zu einer Verschiebungsrichtung eines Ventilkörpers (53) des Auslassventils (50) bewegbar ist zwischen einer Freigabeposition, in der eine Bewegung des Auslassventils (50) in die Öffnungsstellung freigegeben ist, und einer Blockierposition, in der die Bewegung des Auslassventils (50) in die Öffnungsstellung blockiert ist.

3. Aufnahmekupplungselement nach Anspruch 2, bei dem ein Winkel zwischen einer Bewegungsrichtung des Blockierelements (61) relativ zur Verschiebungsrichtung des Ventilkörpers (53) mehr als 45° beträgt.

4. Aufnahmekupplungselement nach Anspruch 2 oder 3, bei dem die Sicherheitseinrichtung (60) zur Umwandlung des Drucks im Fluidkanal (70) stromaufwärts des Auslassventils (50) in eine lateral zu der Verschiebungsrichtung ausgerichtete Bewegung des Blockierelements (61) ausgebildet ist.

5. Aufnahmekupplungselement nach Anspruch 2 bis 4, bei dem die Sicherheitseinrichtung (60) wenigstens ein Rückstellelement (64) aufweist, das dazu ausgebildet ist, das Blockierelement (61) in die Blockierposition zu drängen, wobei die Sicherheitseinrichtung (60) ein Rückhalteelement (62) aufweist, das dazu ausgebildet ist, das Blockierelement (61) in die Freigabeposition zu drängen, indem eine Kontaktfläche des Rückhalteelements (62) gegen eine korrespondierende Kontaktfläche des Blockierelements (61) drückt, wobei die Sicherheitseinrichtung eine dem Druck im Fluidkanal (70) ausgesetzte Angriffsfläche (73) aufweist, durch die der Druck in eine auf das Rückhalteelement (62) ausgeübte Kraft umgewandelt wird, so dass eine vom Rückhalteelement (62) über die Kontaktflächen auf das Blockierelement (61) ausgeübte Kraft reduziert wird.

6. Aufnahmekupplungselement nach einem der Ansprüche 1 bis 5, das eine druckgesteuerte Arretiereinrichtung (62, 63, 65, 66) aufweist, die dazu ausgebildet ist, das Schiebeelement (34) in der Freigabeposition zu arretieren, wenn im Fluidkanal (70) stromaufwärts des Auslassventils (50) ein Druck herrscht, der höher ist als ein zweiter Referenzdruck.

7. Aufnahmekupplungselement nach einem der Ansprüche 2 bis 4, bei dem die Sicherheitseinrichtung (60) wenigstens ein Rückstellelement (64) aufweist, das dazu ausgebildet ist, das Blockierelement (61) in die Blockierposition zu drängen, wobei die Sicherheitseinrichtung (60) ein Rückhalteelement (62) aufweist, das dazu ausgebildet ist, das Blockierelement (61) in die Freigabeposition zu drängen, indem eine Kontaktfläche des Rückhalteelements (62) gegen eine korrespondierende Kontaktfläche des Blockierelements (61) drückt, wobei die Sicherheitseinrichtung eine dem Druck im Fluidkanal (70) ausgesetzte Angriffsfläche (73) aufweist, durch die der Druck in eine auf das Rückhalteelement (62) ausgeübte Kraft umgewandelt wird, so dass eine vom Rückhalteelement (62) über die Kontaktflächen auf das Blockierelement (61) ausgeübte Kraft reduziert wird, wobei das Aufnahmekupplungselement weiterhin eine druckgesteuerte Arretiereinrichtung (62, 63, 65, 66) aufweist, die dazu ausgebildet ist, das Schiebeelement (34) in der Freigabeposition zu arretieren, wenn im Fluidkanal (70) stromaufwärts des Auslassventils (50) ein Druck herrscht, der höher ist als ein zweiter Referenzdruck, wobei das Rückhalteelement der Sicherheitseinrichtung ein Arretierelement der Arretiereinrichtung bildet.

8. Aufnahmekupplungselement nach Anspruch 6, bei dem die druckgesteuerte Arretiereinrichtung (62, 63, 65, 66) weiterhin dazu ausgebildet ist, das Schiebeelement (34) in der Verriegelungsposition zu arretieren, wenn im Fluidkanal (70) stromaufwärts des Auslassventils (50) ein Druck herrscht, der höher ist als ein zweiter Referenzdruck, wobei das Rückhalteelement der Sicherheitseinrichtung vorzugsweise ein Arretierelement der Arretiereinrichtung bildet.

9. Aufnahmekupplungselement nach Anspruch 8, bei dem die druckgesteuerte Arretiereinrichtung (62, 63, 65, 66) ein lateral zu einer Verschiebungsrichtung des Schiebeelements (34) bewegbares Arretierelement (62) aufweist, das zum Eingriff in eine erste Arretieraussparung (65) des Schiebeelements (34) ausgebildet ist, wenn sich das Schiebeelement (34) in der Freigabeposition befindet, und das zum Eingriff in eine zweite Arretieraussparung (66) des Schiebeelements (34) ausgebildet ist, wenn sich das Schiebeelement (34) in der Verriegelungsposition befindet.

10. Aufnahmekupplungselement nach einem der Ansprüche 6 bis 9, bei dem die Arretiereinrichtung (62, 63, 65, 66) weiterhin ein Rückstellelement (63) aufweist, das dazu eingerichtet ist, das Arretierelement (60) in eine Freigabestellung zu drängen, wobei sich das Rückstellelement (63) vorzugsweise in einem Zwischenraum zwischen einer Mittelachse des Aufnahmekupplungselements und der ersten oder zweiten Arretieraussparung (65, 66) befindet.

11. Aufnahmekupplungselement nach einem der Ansprüche 1 bis 10, bei dem der Fluidkanal (70) mit der druckgesteuerten Sicherheitseinrichtung (60) durch einen Druckübertragungskanal (71) verbunden ist, der sich ausgehend von einer stromabwärts weisenden Stirnfläche in eine stromaufwärtige Richtung erstreckt.

12. Aufnahmekupplungselement nach einem der Ansprüche 6 bis 10, bei dem der Fluidkanal (70) mit der druckgesteuerten Arretiereinrichtung (62, 63, 65, 66) und/oder mit der druckgesteuerten Sicherheitseinrichtung (60) durch einen Druckübertragungskanal (71) verbunden ist, der sich ausgehend von einer stromabwärts weisenden Stirnfläche in eine stromaufwärtige Richtung erstreckt.

13. Anschlusskupplung, umfassend: ein Aufnahmekupplungselement nach einem der Ansprüche 1 bis 12; einen Fluidanschluss (17), an den die Fluidzuleitung anschließbar ist; einen Hauptkanal (19, 70), der sich vom Fluidanschluss (17) über den Einlass bis zum Fluidauslass (18) erstreckt, ein stromaufwärts des Auslassventils (50) positioniertes Hauptventil (20) zur Steuerung eines Fluiddurchflusses durch den Hauptkanal (19, 70) und eine Betätigungseinrichtung (40) zur Betätigung der Kupplungseinrichtung und des Hauptventils (20) .

14. Anschlusskupplung nach Anspruch 13, bei dem die Betätigungseinrichtung dazu eingerichtet ist, eine Verschiebung des Schiebeelements (34) zu bewirken, um den Fluidauslass (18) am Anschlussstutzen (9) zu verriegeln oder zu lösen.

15. Anschlusskupplung nach Anspruch 13 oder 14, bei dem die Betätigungseinrichtung (40) dazu eingerichtet ist, ausgehend von einer Ausgangsstellung, in dem das Hauptventil (20) geschlossen und der Fluidauslass (9) vom Anschlussstutzen (9) gelöst ist, zuerst die Kupplungseinrichtung zur Verriegelung des Fluidauslasses (18) am Anschlussstutzen (9) zu betätigen und anschließend das Hauptventil (20) zu betätigen, um das Hauptventil (20) zu öffnen.
